# EUROPEAN PATENT APPLICATION

(11) **EP 4 513 363 A1**
(43) Date of publication of application: **26.02.2025**
(21) Application number: 23791896.6
(22) Date of filing: 19.04.2023
(51) Int. Cl.: G06F 21/32

(54) **INFORMATION PROCESSING DEVICE**

(30) Priority: 21.04.2022 JP 2022070151
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: TOSHIMITSU, Kiyoshi, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2023/015625
(87) International publication number: WO 2023/204248

(57) **Abstract**

An information processing apparatus capable of effectively performing fingerprint authentication is provided.

According to an embodiment, an information processing apparatus includes a communication unit, an operation unit, a storage unit, a fingerprint sensor, and a processor. The communication unit transmits and receives data to and from an external device. The operation unit accepts inputting of an operation. The storage unit stores data. The fingerprint sensor captures fingerprint information from a finger in response to the inputting of the operation to the operation unit. The processor is configured to: perform fingerprint authentication based on the fingerprint information; store, if the fingerprint authentication has succeeded, authentication information indicating that the fingerprint authentication has succeeded in the storage unit; and if the authentication information is stored in the storage unit, upon receiving a fingerprint authentication request requesting fingerprint authentication from the external device via the communication unit, transmit, to the external device via the communication unit, a fingerprint authentication response indicating that the fingerprint authentication has succeeded.

## Description

### FIELD

An embodiment of the present invention relates to an information processing apparatus.

### BACKGROUND

An information processing apparatus such as an IC card that performs fingerprint authentication by capturing the user's fingerprints is known. There is a type of information processing apparatus in which fingerprint authentication is performed at the time of connection to a terminal (at the time of activation) and results of the fingerprint authentication are stored to reduce the time for fingerprint authentication.

There is also a type of information processing apparatus in which a connection-related operation, such as an operation of starting a wireless connection with a terminal or an operation of selecting a terminal to which a connection is to be made, is accepted before a connection is made to the terminal.

Conventionally, an information processing apparatus attempting to connect with a terminal that requires fingerprint authentication has been required to follow a procedure of capturing fingerprints in addition to inputting of a connection-related operation.

### CITATION LIST

### PATENT LITERATURE

Patent Literature 1: Japanese Patent KOKAI Publication No. 2018-156548

### SUMMARY

### TECHNICAL PROBLEM

To solve the above-described problem, an information processing apparatus capable of effectively performing fingerprint authentication is provided.

### SOLUTION TO PROBLEM

According to an embodiment, an information processing apparatus includes a communication unit, an operation unit, a storage unit, a fingerprint sensor, and a processor. The communication unit transmits and receives data to and from an external device. The operation unit accepts inputting of an operation. The storage unit stores data. The fingerprint sensor captures fingerprint information from a finger in response to the inputting of the operation to the operation unit. The processor is configured to: perform fingerprint authentication based on the fingerprint information; store, if the fingerprint authentication has succeeded, authentication information indicating that the fingerprint authentication has succeeded in the storage unit; and if the authentication information is stored in the storage unit, upon receiving a fingerprint authentication request requesting fingerprint authentication from the external device via the communication unit, transmit, to the external device via the communication unit, a fingerprint authentication response indicating that the fingerprint authentication has succeeded.

### BRIEF DESCRIPTION OF THE DRAWINGS

FIG. 1 is a diagram showing a configuration example of an authentication system according to an embodiment.
FIG. 2 is a diagram schematically showing a configuration example of an authentication device according to the embodiment.
FIG. 3 is a sequence diagram showing an operation example of the authentication system according to the embodiment.

### DETAILED DESCRIPTION

Hereinafter, an embodiment will be described with reference to the accompanying drawings.

An authentication system according to the embodiment includes an authentication device carried by a predetermined user and a terminal. The authentication device establishes communications with the terminal in accordance with the user's operation. After establishing the communications, the authentication device receives, from the terminal, a fingerprint authentication request requesting fingerprint authentication. In response to the fingerprint authentication request, the authentication device transmits, to the terminal, a fingerprint authentication response indicating results of the fingerprint authentication.

Based on the results of the fingerprint authentication indicated by the fingerprint authentication response, the terminal performs a predetermined process. Based on the results of the fingerprint authentication, the terminal performs, for example, a settlement process. Based on the results of the fingerprint authentication, the terminal may also allow withdrawal of deposits, allow opening or closing of a door, give entry permission, allow a registration process, or the like. The operation performed by the terminal is not limited to a particular configuration.

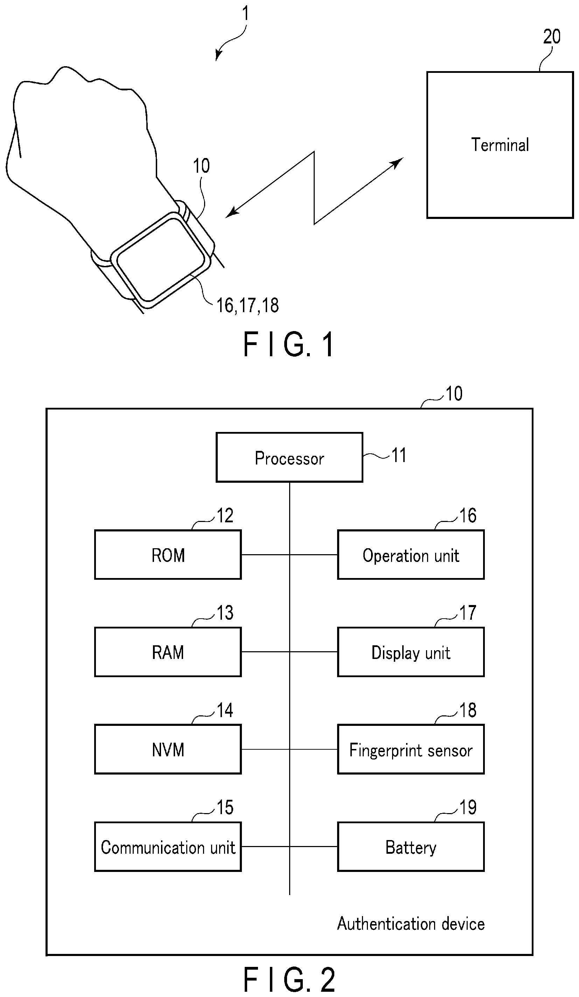

FIG. 1 shows a configuration example of an authentication system 1 according to an embodiment. As shown in FIG. 1, the authentication system 1 includes an authentication device 10 and a terminal 20. The authentication device 10 and the terminal 20 are connected to each other so as to enable communications thereamong.

The authentication device 10 (information processing apparatus) is a terminal carried by a user. The authentication device 10 establishes wireless communications with the terminal 20 in accordance with the user's operation. Herein, the authentication device 10 is connected to the terminal 20 via Bluetooth (registered trademark). The authentication device 10 operates as a peripheral device.

It is also assumed herein that the authentication device 10 is a terminal in the form of a wristwatch.

The authentication device 10 includes an operation unit 16, a display unit 17, a fingerprint sensor 18, and the like.

The operation unit 16 is formed at a position that can be tapped by a user wearing the authentication device 10. The operation unit 16 accepts a user's tap and accepts inputting of an operation. The operation unit 16 transmits a signal indicating the input operation to a processor 11, to be described later. Herein, the operation unit 16 is configured of a touch panel.

The display unit 17 displays image data from the processor 11. The display unit 17 is configured of, for example, a liquid crystal monitor. Herein, the display unit 17 is integrally formed with the touch panel functioning as the operation unit 16.

The fingerprint sensor 18 is formed at a position where fingerprints can be captured from a finger of a user who has tapped the operation unit 16. Herein, the fingerprint sensor 18 is integrally formed with the operation unit 16 and the display unit 17.

The fingerprint sensor 18 captures fingerprint information related to fingerprints from any one of the user's fingers. The fingerprint sensor 18 transmits the captured fingerprint information to the processor 11. The fingerprint information may be a fingerprint image. The fingerprint information may be a feature amount or the like of the fingerprint image.

The fingerprint sensor 18 is configured of, for example, an optical sensor for photographing fingerprints. The fingerprint sensor 18 may be configured of a sensor or the like that detects a capacitance.

The fingerprint sensor 18 may be configured to capture fingerprints from a finger of a user who has tapped a predetermined region of the operation unit 16.

The authentication device 10 will be described in detail later.

The terminal 20 (external device) establishes a wireless connection with the authentication device 10. Herein, the terminal 20 is connected to the authentication device 10 via Bluetooth.

The terminal 20 operates as a central device. The terminal 20 receives, for example, an advertising signal from the authentication device 10. After receiving an advertising signal, the terminal 20 transmits a connection request to the authentication device 10.

In response to the connection request, the terminal 20 receives a connection response from the authentication device 10. After receiving the connection response, the terminal 20 establishes a wireless connection with the authentication device.

Upon establishing the wireless connection, the terminal 20 transmits a fingerprint authentication request requesting fingerprint authentication to the authentication device 10. In response to the fingerprint authentication request, the terminal 20 receives a fingerprint authentication response indicating results of the fingerprint authentication. Upon receiving the fingerprint authentication response, the terminal 20 performs a predetermined process in accordance with the results of the fingerprint authentication.

If, for example, the fingerprint authentication response indicates that the authentication has succeeded, the terminal 20 performs a settlement process. The process performed by the terminal 20 in accordance with the results of the fingerprint authentication is not limited to a particular configuration.

The terminal 20 includes, for example, an antenna, a communication control unit, and the like for performing wireless communications with the authentication device 10.

Next, a control system of the authentication device 10 will be described.

FIG. 2 is a block diagram showing a control system of the authentication device 10. As shown in FIG. 2, the authentication device 10 includes a processor 11, a ROM 12, a RAM 13, an NVM 14, a communication unit 15, a display unit 17, an operation unit 16, a fingerprint sensor 18, a battery 19, and the like.

The processor 11 and the ROM 12, the RAM 13, the NVM 14, the communication unit 15, the display unit 17, the operation unit 16, the fingerprint sensor 18, and the battery 19 are connected to one another via a data bus or the like.

The display unit 17, the operation unit 16, and the fingerprint sensor 18 are as described above.

The processor 11 is equipped with a function of controlling the entire operation of the authentication device 10. The processor 11 may include an internal cache, various types of interfaces, and the like. The processor 11 realizes various processes by executing a program stored in advance in an internal memory, the ROM 12, or the NVM 14.

Some of the various functions realized by execution of the programs by the processor 11 may be realized by hardware circuitry. In this case, the processor 11 controls the functions executed by the hardware circuitry.

The ROM 12 is a non-volatile memory storing in advance a control program, control data, and the like. The control program and the control data stored in the ROM 12 are incorporated in advance in accordance with the specifications of the authentication device 10.

The RAM 13 is a volatile memory. The RAM 13 temporarily stores data being processed by the processor 11. The RAM 13 stores various application programs based on an instruction from the processor 11. Also, the RAM 13 may store data necessary for executing the application programs and results of execution of the application programs.

The NVM 14 (storage unit) is a non-volatile memory into which data can be written and rewritten. The NVM 14 is configured, for example, of a hard disk drive (HDD), a solid-state drive (SSD), a flash memory, or the like. The NVM 14 stores control programs, applications, and various data according to the application purpose of the authentication device 10.

Also, the NVM 14 stores in advance a template for performing fingerprint authentication using fingerprint information. The template is a template corresponding to fingerprint information to be captured by the fingerprint sensor 18. The template is configured of, for example, a fingerprint image of the user, a feature amount of the fingerprint image, or a network for fingerprint authentication.

The NVM 14 includes a region for storing authentication information indicating that the fingerprint authentication has succeeded. The authentication information is, for example, a flag (e.g., "1") indicating that the fingerprint authentication has succeeded. The NVM 14 does not store authentication information at the time of activation. The NVM 14 stores, for example, "0" in the above-described region at the time of activation.

The communication unit 15 is an interface for wirelessly transmitting and receiving data to and from the terminal 20, etc. Herein, the communication unit 15 supports Bluetooth connections.

The battery 19 supplies power to each unit of the authentication device 10. The battery 19 may be a secondary battery that can be externally charged. The battery 19 is charged by, for example, power from an antenna. The battery 19 may also be a disposable battery.

The authentication device 10 may include not only the components shown FIGS. 1 and 2 but also other necessary components; furthermore, a particular component may be excluded from the authentication device 10.

The authentication device 10 may include, for example, an interface that supports a wired or wireless local area network (LAN) connection.

Next, functions realized by the authentication device 10 will be described. The functions of the processor 11 are realized through execution of programs stored in an internal memory, the ROM 12, the NVM 14, or the like by the processor 11.

The processor 11 is equipped with a function of transmitting an advertising signal via the communication unit 15.

The processor 11 displays, on the display unit 17, an icon for allowing inputting of an operation of causing transmission of an advertising signal to be started. The operation of causing transmission of an advertising signal to be started is an operation to start establishment of a Bluetooth connection with the terminal 20, etc.

It is assumed herein that the user taps an icon with his or her finger. That is, it is assumed that the user brings his or her finger into contact with the operation unit 16 and the fingerprint sensor 18.

The processor 11 detects a tap on the icon via the operation unit 16. Upon accepting a tap on the icon, the processor 11 transmits an advertising signal to the terminal 20 via the communication unit 15.

The processor 11 continues transmission of an advertising signal during a predetermined period or during a period up until a Bluetooth connection is established.

The processor 11 is equipped with a function of establishing a Bluetooth connection with the terminal 20.

After transmitting the advertising signal, the processor 11 waits until a connection request is received from the terminal 20 via the communication unit 15.

Upon receiving a connection request, the processor 11 displays, on the display unit 17, identification information indicating a source of transmission (e.g., the terminal 20) of the connection request.

The connection request stores, for example, identification information of the source of transmission. The identification information is configured of an ID, etc. for identifying the source of transmission.

If multiple connection requests are received, the processor 11 displays identification information indicating a source of transmission of each connection request to the display unit 17.

After displaying the identification information on the display unit 17, the processor 11 accepts, via the operation unit 16, an input of an operation of selecting a destination of connection. Upon receiving a tap on a region in which the identification information is being displayed, the processor 11 selects, for example, a source of transmission indicated by the identification information as a destination of a Bluetooth connection.

It is assumed herein that the user taps the region in which the identification information indicating the terminal 20 is being displayed with his or her finger. That is, it is assumed that the user brings his or her finger into contact with the operation unit 16 and the fingerprint sensor 18.

The processor 11 accepts a tap on the region via the operation unit 16. Upon accepting a tap on the region, the processor 11 transmits a connection response to the terminal 20 via the communication unit 15.

After transmitting a connection response to the terminal **20,** the processor 11 establishes a Bluetooth connection with the terminal 20 via the communication unit 15.

Also, the processor 11 is equipped with a function of performing fingerprint authentication by capturing fingerprint information in response to inputting of a connection-related operation.

Herein, the connection-related operation is an operation of causing transmission of an advertising signal to be started or an operation of selecting a destination of connection.

As described above, the user taps the operation unit 16 with his or her finger, thereby inputting a connection-related operation to the authentication device 10. The user taps the operation unit 16, and brings his or her finger into contact with the fingerprint sensor 18.

The processor 11 captures fingerprint information from the user's finger via the fingerprint sensor 18 in response to inputting of a connection-related operation. After capturing the fingerprint information, the processor 11 verifies the captured fingerprint information against the template stored in the NVM 14 in accordance with a predetermined algorithm. If the template and the fingerprint information match (are identical), the processor 11 determines that the fingerprint authentication has succeeded.

Upon determining that the fingerprint authentication has succeeded, the processor 11 stores, in the NVM 14, authentication information indicating that the fingerprint authentication has succeeded. The processor 11 sets, for example, a flag (e.g., "1").

Herein, the processor 11 performs the above-described fingerprint authentication after an operation of causing transmission of an advertising signal to be started or an operation of selecting a destination of connection.

If capturing of the fingerprint information has failed, or if it has been determined that the template and the fingerprint information do not match, the processor 11 determines that the fingerprint authentication has failed. Even if it has been determined that the fingerprint authentication has failed, the processor 11 maintains the authentication information stored in the NVM 14.

If, for example, authentication information is stored in the NVM 14 in response to inputting of an operation of causing transmission of an advertising signal to be started, the processor 11 maintains the authentication information even in the event of a failure of fingerprint authentication in response to inputting of an operation of selecting a destination of connection.

Also, if authentication information is stored in the NVM 14 in response to inputting of an operation of causing transmission of an advertising signal to be started, the processor 11 may not perform fingerprint authentication in response to inputting of an operation of selecting a destination of connection.

The processor 11 deletes the authentication information from the NVM 14 if the Bluetooth connection with the terminal 20 is interrupted. That is, the processor 11 resets the flag (by rewriting it from "1" to "0"). The processor 11 deletes the authentication information if, for example, the Bluetooth connection with the terminal 20 is terminated, or if the Bluetooth connection with the terminal 20 times out.

The processor 11 may delete the authentication information after a predetermined period of time has elapsed, even while the Bluetooth connection with the terminal 20 is maintained.

The processor 11 is equipped with a function of transmitting a fingerprint authentication response to the terminal 20 based on the authentication information.

As described above, after establishing a Bluetooth connection with the authentication device 10, the terminal 20 transmits, to the authentication device 10, a fingerprint authentication request requesting fingerprint authentication.

The processor 11 of the authentication device 10 receives, via the communication unit 15, the fingerprint authentication request from the terminal 20. After receiving the fingerprint authentication request, the processor 11 determines whether or not the authentication information is stored in the NVM 14. That is, the processor 11 determines whether a flag indicating that the fingerprint authentication has succeeded is set.

Upon determining that the authentication information is stored in the NVM 14, the processor 11 transmits, to the terminal 20 via the communication unit 15, a fingerprint authentication response indicating that the fingerprint authentication has succeeded. In this case, the processor 11 does not perform fingerprint authentication.

The processor 11 may allow the user to tap the fingerprint sensor 18. In this case, the processor 11 may not capture fingerprint information. Also, the processor 11 may capture fingerprint information but may not verify the fingerprint information against the template.

Upon determining that the authentication information is not stored in the NVM 14, the processor 11 captures, via the fingerprint sensor 18, fingerprint information from the user's finger. The processor 11 causes the display unit 17 to display, for example, a message, etc. prompting the user to bring his or her finger into contact with the fingerprint sensor 18. Responsive thereto, the user brings his or her finger into contact with the fingerprint sensor 18.

After capturing the fingerprint information, the processor 11 verifies the captured fingerprint information against the template stored in the NVM 14 in accordance with a predetermined algorithm. If the template and the fingerprint information match, the processor 11 determines that the fingerprint authentication has succeeded.

Upon determining that the fingerprint authentication has succeeded, the processor 11 transmits, to the terminal 20 via the communication unit 15, a fingerprint authentication response indicating that the fingerprint authentication has succeeded.

Upon determining that the fingerprint authentication has failed, the processor 11 transmits, to the terminal 20 via the communication unit 15, a fingerprint authentication response indicating that the fingerprint authentication has failed.

Next, an operation example of the authentication system 1 will be described.

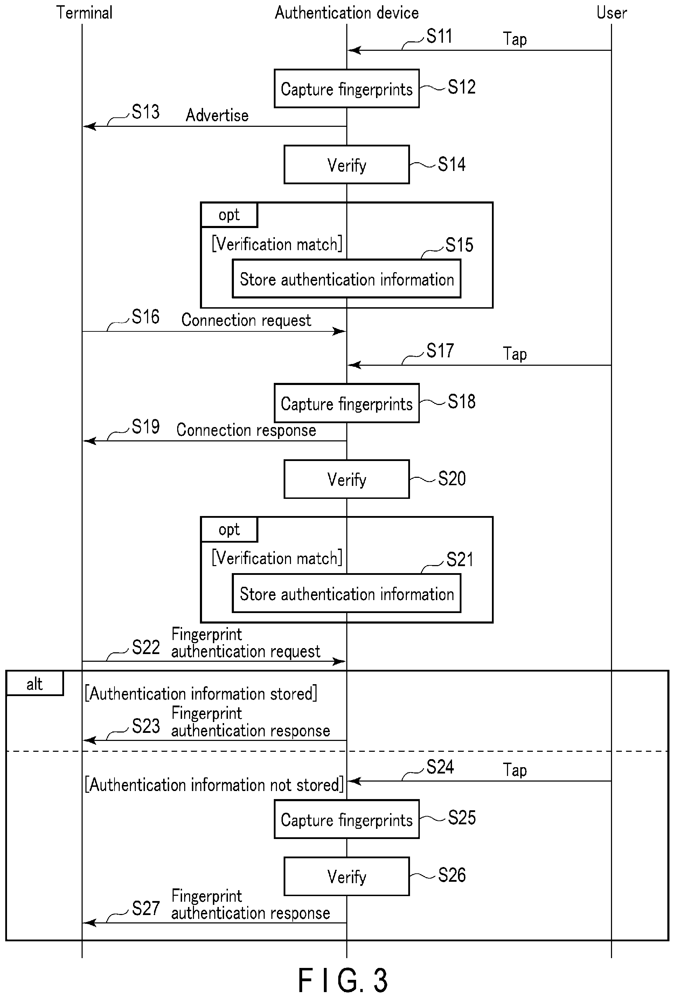

FIG. 3 is a sequence diagram for illustrating an operation example of the authentication system 1.

First, the user taps the operation unit 16, and inputs an operation of causing transmission of an advertising signal to be started (S11).

The processor 11 of the authentication device 10 accepts the inputting of the operation via the operation unit 16. Also, the processor 11 captures fingerprint information from the user's finger via the fingerprint sensor 18 in response to the inputting of the operation (S12).

After capturing the fingerprint information, the processor 11 starts transmission of an advertising signal via the communication unit 15 (S13). After starting transmission of the advertising signal, the processor 11 verifies the captured fingerprint information against the template (S14).

Upon determining that the captured fingerprint information matches the template, the processor 11 stores the authentication information in the NVM 14 (S15).

Responsive thereto, the terminal 20 transmits a connection request to the authentication device 10 (S16).

The processor 11 of the authentication device 10 receives, via the communication unit 15, the connection request from the terminal 20. Upon receiving the connection request, the processor 11 accepts selecting of a destination of connection.

Responsive thereto, the user taps the operation unit 16 and inputs an operation of selecting a destination of connection (S17).

The processor 11 of the authentication device 10 accepts the inputting of the operation via the operation unit 16. Also, the processor 11 captures fingerprint information from the user's finger via the fingerprint sensor 18 in response to the inputting of the operation (S18).

After capturing the fingerprint information, the processor 11 transmits, via the communication unit 15, a connection response to the terminal 20 (S19). After transmitting the connection response, the processor 11 verifies the captured fingerprint information against the template (S20).

Upon determining that the captured fingerprint information matches the template, the processor 11 stores the authentication information in the NVM 14 (S21).

Responsive thereto, the terminal 20 transmits a fingerprint authentication request to the authentication device 10 (S22).

The processor 11 of the authentication device 10 receives, via the communication unit 15, the fingerprint authentication request from the terminal 20. After receiving the fingerprint authentication request, the processor 11 determines whether or not the authentication information is stored in the NVM 14.

Upon determining that the authentication information is stored in the NVM 14, the processor 11 transmits, to the terminal 20 via the communication unit 15, a fingerprint authentication response indicating that the fingerprint authentication has succeeded (S23).

Upon determining that the authentication information is not stored in the NVM 14, the processor 11 causes the display unit 17 to display a message prompting the user to bring his or her finger into contact with the fingerprint sensor 18.

It is assumed herein that the user brings his or her finger into contact with the fingerprint sensor 18 (S24).

The processor 11 captures fingerprint information from the user's finger via the fingerprint sensor 18 (S25). After capturing the fingerprint information, the processor 11 verifies the captured fingerprint information against the template (S26).

Upon verifying the captured fingerprint information against the template, the processor 11 transmits, to the terminal 20, a fingerprint authentication response indicating that the fingerprint verification has succeeded or failed, based on the result of verification (S27).

In the case of executing S15, the processor 11 may not perform S18, S20, and S21.

Also, the processor 11 may allow the user to tap the fingerprint sensor 18 upon determining that the authentication information is stored in the NVM 14.

The terminal 20 may transmit multiple fingerprint authentication requests to the authentication device 10. In this case, the processor 11 of the authentication device 10 may transmit, to the terminal 20, a fingerprint authentication response in each fingerprint authentication request based on the authentication information.

Also, the operation unit 16 may be a physical switch formed integrally with the fingerprint sensor 18. Moreover, a fingerprint sensor 18 may be formed on, for example, an upper surface of a switch functioning as the operation unit 16.

Furthermore, the processor 11 may simultaneously perform step S13 and steps S12, S14, and S15 in parallel. Moreover, the processor 11 may be configured to receive a connection request while executing steps S14 and S15.

Furthermore, the processor 11 may simultaneously perform step S19 and steps S18, S20, and S21 in parallel. Moreover, the processor 11 may be configured to receive a fingerprint authentication request while executing steps S20 and S21.

In addition, the template may be stored in a security element or the like. In this case, the security element may be configured to verify the fingerprint information against the template.

With the above-described configuration, the authentication system captures fingerprint information from the user's finger in response to the user's inputting of an operation related to a connection between a terminal and an authentication device. The authentication system performs fingerprint authentication using the fingerprint information, and stores, if the fingerprint authentication has succeeded, authentication information in the authentication device.

After transmitting a fingerprint authentication request to the authentication device from the terminal while the authentication device stores the authentication information, the authentication system transmits a fingerprint authentication response indicating that the fingerprint authentication has succeeded from the authentication device to the terminal.

This allows the authentication system to transmit a fingerprint authentication response indicating that the fingerprint authentication has succeeded, without the need to perform fingerprint authentication after transmitting a fingerprint authentication request. It is thus possible, with the authentication system, to simplify the procedure for fingerprint authentication.

With the authentication system, it is possible to provide multiple opportunities for performing fingerprint authentication. It is thereby possible, with the authentication system, to decrease the possibility of a valid user failing fingerprint authentication.

While certain embodiments have been described, these embodiments have been presented by way of example only, and are not intended to limit the scope of the inventions. Indeed, the new embodiments described herein may be embodied in a variety of other forms, and various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. An information processing apparatus, comprising:
a communication unit configured to transmit and receive data to and from an external device;
an operation unit configured to accept inputting of an operation;
a storage unit configured to store data;
a fingerprint sensor configured to capture fingerprint information from a finger in response to the inputting of the operation to the operation unit; and
a processor configured to:
perform fingerprint authentication based on the fingerprint information;
store, if the fingerprint authentication has succeeded, authentication information indicating that the fingerprint authentication has succeeded in the storage unit; and
if the authentication information is stored in the storage unit, upon receiving a fingerprint authentication request requesting fingerprint authentication from the external device via the communication unit, transmit, to the external device via the communication unit, a fingerprint authentication response indicating that the fingerprint authentication has succeeded.

2. The information processing apparatus according to claim 1, wherein
the communication unit wirelessly transmits and receives data to and from the external device.

3. The information processing apparatus according to claim 2, wherein
the operation is an operation related to a wireless connection with the external device.

4. The information processing apparatus according to claim 3, wherein
the wireless connection is a Bluetooth connection, and
the operation is an operation of causing transmission of an advertising signal to be started, or an operation of selecting a destination of connection.

5. The information processing apparatus according to any one of claims 1 to 4, wherein
the operation unit is a touch panel, and
the fingerprint sensor is configured to capture the fingerprint information from a finger that has tapped the touch panel.

6. The information processing apparatus according to any one of claims 1 to 4, wherein
if the authentication information is not stored in the storage unit, upon receiving a fingerprint authentication request requesting fingerprint authentication from the external device via the communication unit, the processor captures the fingerprint information via the fingerprint sensor, and transmits, to the external device via the communication unit, a fingerprint authentication response indicating that the fingerprint authentication has succeeded or failed based on a result of the fingerprint authentication.

7. The information processing apparatus according to any one of claims 1 to **4,** wherein
the processor deletes the authentication information from the storage unit if a communication with the external device is interrupted.
